Europäisches Patentamt

**European Patent Office**

**Office européen des brevets**

(11) Numéro de publication : **0 123 624**
**B1**

(12) **FASCICULE DE BREVET EUROPÉEN**

(45) Date de publication du fascicule du brevet :
**16.06.87**

(21) Numéro de dépôt : **84400820.1**

(22) Date de dépôt : **20.04.84**

(51) Int. Cl.⁴ : **H 01 H 47/26**, H 01 H 53/015,
**G 01 K 7/02**

(54) Dispositif autoalimenté de commutation sensible à un gradient de température.

(30) Priorité : **21.04.83 FR 8306569**

(43) Date de publication de la demande :
**31.10.84 Bulletin 84/44**

(45) Mention de la délivrance du brevet :
**16.06.87 Bulletin 87/25**

(84) Etats contractants désignés :
**AT BE CH DE GB IT LI LU NL SE**

(56) Documents cités :
**FR-A- 652 912**
**US-A- 2 304 489**
**US-A- 2 927 179**

(73) Titulaire : **MATERIEL ET AUXILIAIRE DE SIGNALISA-TION ET DE CONTROLE POUR L'AUTOMATION - AUXITROL**
**187-189 Boulevard Saint Denis**
**F-92403 Courbevoie (FR)**

(72) Inventeur : **Gautheret, Georges**
**16, avenue Dubonnet**
**F-92400 Courbevoie (FR)**

(74) Mandataire : **Martin, Jean-Jacques et al**
**Cabinet REGIMBEAU 26, Avenue Kléber**
**F-75116 Paris (FR)**

Jouve, 18, rue St-Denis, 75001 Paris, France

## Description

La présente invention concerne un dispositif autoalimenté de commutation sensible à un gradient de température.

Ce dispositif convient notamment à la commutation des capteurs de mesure à thermocouples utilisés pour la mesure de températures de combustion des turboréacteurs d'avions.

Dans ces moteurs, il est en effet souhaitable de mesurer la température de combustion des gaz avec la plus grande précision, pour conserver au moteur son rendement optimal.

Du fait que l'éjection des gaz brûlés est réalisée sur une section en forme de couronne, on emploie généralement une série ou « harnais » de capteurs de température, en général de thermocouples, au nombre de 2 à 12 répartis circulairement dans la couronne et reliés en parallèle de manière que la tension commune au point de raccordement de tous les thermocouples représente sensiblement une mesure de la moyenne des températures dans la couronne d'éjection des gaz.

Le FR-A-2 382 000 décrit un tel harnais, pour lequel il propose un mode de compensation des différents thermocouples de manière à donner à chaque branche de thermocouple une même impédance. La compensation reste ainsi toujours équilibrée malgré les variations des températures.

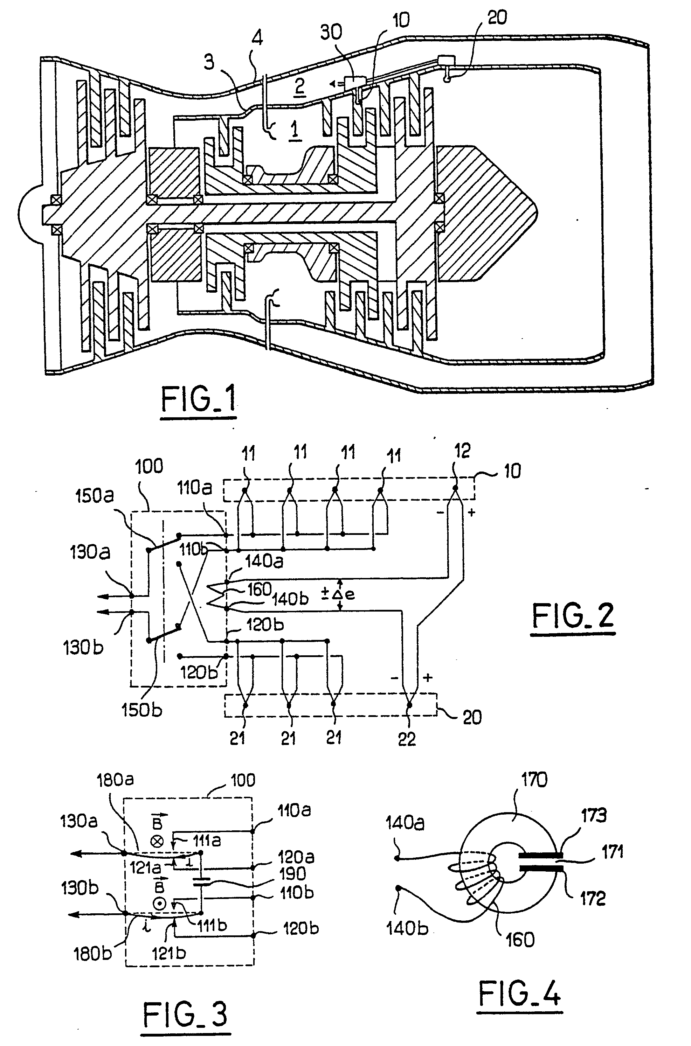

On notera de ce qui précède que l'on mesure la température d'éjection des gaz, et non la température de combustion, qui est le paramètre à surveiller. Ceci résulte du fait qu'il n'est pas possible de placer les sondes de mesure au cœur même de la chambre de combustion du réacteur (référencée 1 sur la figure 1 qui représente une vue en coupe schématique d'un réacteur). On peut seulement les placer à proximité de cette chambre, par exemple dans un logement pratiqué dans une aube fixe en aval de la chambre de combustion. La référence 10 désigne l'une des sondes du harnais installée de cette manière.

En général, la mesure de la température d'éjection des gaz brûlés est une bonne image de la température de combustion.

Ceci n'est cependant pas vrai dans certaines configurations particulières de vol, notamment lors des inversions de flux : dans ce cas, les aubes fixes percées prélèvent, à plusieurs niveaux, de l'air frais dans le canal 2 situé entre les enveloppes intérieure 3 et extérieure 4 du réacteur pour le réinjecter dans le circuit des gaz brûlés. L'inversion du sens de circulation des gaz prélevés entraîne une chute brutale à l'endroit du harnais de thermocouples 10 (chute de plusieurs dizaines de degrés pour une température des gaz d'éjection de l'ordre de 950 °C), et bien que la température de combustion reste sensiblement la même.

Les pilotes sont avertis de ce phénomène et savent que, lors des inversions de flux, il n'y a pas lieu de tenir compte des chutes brutales qui apparaissent sur les indicateurs de température du tableau de bords.

Par ailleurs, on sait qu'il existe — pour cette configuration de vol mais pour elle seulement — une autre position pour les thermocouples à laquelle la température des gaz d'éjection est une bonne image de la température de combustion.

Cependant, l'implantation des circuits de mesure de température dans les réacteurs actuellement existants ne permet pas de sortir plus de deux conducteurs. Il n'est donc pas possible, si l'on souhaite adapter une double mesure à des réacteurs existants, de disposer deux harnais de thermocouples (qui seraient placés par exemple en 10 et 20 sur la figure 1) avec deux sorties vers deux indicateurs distincts donnant la température à l'un et l'autre emplacement du réacteur, ou vers un dispositif de commutation agissant en fonction d'un signal de configuration de vol délivré en fonction des commandes imposées par le pilote.

Un des buts de l'invention est de pallier ces difficultés, en proposant un dispositif pour assurer une commutation sélective de l'un ou l'autre de deux circuits électriques de mesure à un circuit électrique unique d'exploitation qui puisse être notamment applicable à la mesure des températures d'un réacteur.

Un autre but de l'invention est de proposer un tel dispositif qui, en raison de la limitation du nombre des conducteurs de sortie et de la place disponible pour son installation, puisse être placé in situ, sur le réacteur, et puisse donc fonctionner malgré une température ambiante élevée (de l'ordre de 300 à 350 °C, ce qui exclut l'emploi de composants électroniques) et surtout qui soit autonome et assure une commutation passive (c'est-à-dire qui ne puise son énergie qu'en lui-même), du fait de l'impossibilité de prévoir une ligne supplémentaire d'alimentation en énergie électrique sur le réacteur.

Pour cela, l'invention propose d'opérer la commutation en fonction du gradient de température présent entre deux points distincts de référence, grâce à un dispositif comportant :

un premier thermocouple placé au premier point de référence,

un deuxième thermocouple placé au second point de référence, monté en opposition avec le premier thermocouple de manière à délivrer une force électro-motrice différentielle Δe dont la valeur et le signe sont fonction de la valeur et du sens du gradient,

des moyens de commutation, sensibles à cette force électro-motrice et alimentés par la seule énergie produite par les deux thermocouples, propres à relier sélectivement l'un ou l'autre circuit de mesure au circuit d'exploitation selon le sens de variation de la force électro-motrice différentielle par rapport à la force électro-motrice correspondant à un gradient nul, lorsque la valeur absolue de cette variation dépasse un seuil prédéterminé.

On emploie ainsi la force électro-motrice différentielle (produite par l'effet Peltier sur les thermocouples) résultant du gradient de température pour autoalimenter et commander les moyens de commutation, le sens de variation de la force électro-motrice différentielle par rapport à la force électro-motrice correspondant à un gradient nul représentant le sens du gradient et indiquant le choix du circuit de mesure à commuter (ce sens de variation est équivalent au signe de la force électro-motrice lorsque les deux thermocouples sont de même nature).

Dans le cas particulier du réacteur précédemment décrit, chacun des circuits de mesure est relié à un harnais de thermocouples placé respectivement au voisinage du premier ou du second point de référence. La commutation se fait alors — et de façon purement passive — sur le harnais soumis à la température la plus élevée, c'est-à-dire sur celui dont la mesure donne la meilleure image de la température de combustion, et ceci quelle que soit la configuration de vol.

L'adaptation à un réacteur existant se fait sans difficulté ; il suffit de disposer un harnais supplémentaire et de prévoir le dispositif de commutation par exemple à l'intérieur d'une des boîtes de raccordement (référencée 30 sur la figure 1) déjà existantes, où les thermocouples sont reliés entre eux en parallèle et aux deux conducteurs du circuit de mesure.

Plus précisément, les moyens de commutation comprennent un relais polarisé dont les bornes de l'enroulement sont alimentées par la force électro-motrice différentielle, le champ magnétique produit par cet enroulement actionnant une lame mobile porte-contacts assurant la commutation sélective des différents circuits, qui aboutissent à des bornes fixes du relais. Eventuellement, les contacts sont des contacts avec recouvrement, pour éviter une interruption de la continuité de la mesure au moment de la commutation.

En variante et avantageusement, les moyens de commutation comprennent :

au moins une paire de contacts fixes distincts, placés en vis-à-vis et reliés respectivement à l'un et l'autre des circuits de mesure,

au moins un fil, mobile entre les deux contacts fixes, et dont une extrémité est reliée au circuit d'exploitation, ce fil venant en contact avec l'un ou l'autre des contacts fixes de manière à laisser transiter un courant de mesure entre l'un des circuits de mesure et le circuit d'exploitation, et la direction de ce courant étant sensiblement perpendiculaire à la direction de déplacement du fil,

un élément générateur de champ magnétique alimenté par la force électro-motrice différentielle, ce champ magnétique B, orienté perpendiculairement à la direction du courant et à la direction de déplacement du fil, agissant sur le fil mobile traversé par le courant de mesure de manière à le faire venir sélectivement en contact avec l'un ou l'autre des contacts fixes en fonction du signe de la force électro-motrice différentielle,

des moyens pour maintenir un courant dans le fil lorsque celui-ci quitte au moins l'un des contacts fixes.

D'autres caractéristiques et avantages de l'invention apparaîtront à la lecture de la description détaillée ci-dessous, faite en référence aux dessins annexés, sur lesquels :

la figure 1 déjà mentionnée représente une coupe schématique d'un réacteur montrant l'implantation du dispositif,

la figure 2 est un schéma électrique du dispositif de l'invention, avec les divers thermocouples auxquels il est relié,

la figure 3 est une variante du dispositif de la figure 1 utilisant un fil mobile dans un champ magnétique,

la figure 4 montre un exemple d'élement générateur de champ magnétique utilisable avec le dispositif de la figure 3.

Sur la figure 2, le dispositif de commutation 100 comprend deux bornes 110a et 110b reliées à un premier circuit de mesure, deux bornes 120a, 120b reliées à un second circuit de mesure, deux bornes 130a, 130b reliées à un circuit d'exploitation (non représenté) et deux bornes 140a, 140b pour l'alimentation et la commande du dispositif. Le premier circuit de mesure comprend par exemple une série de thermocouples 11 reliés en parallèle, et le second circuit de mesure une série de thermocouples 21 reliés en parallèle.

Les thermocouples 11 sont associés à un thermocouple supplémentaire 12, distinct, pour former un premier harnais 10 placé circulairement dans une première zone de mesure de température du réacteur (figure 1).

Par ailleurs, les thermocouples 21 sont associés à un thermocouple 22, distinct, pour former un second harnais 20 placé circulairement en une seconde zone de mesure de température du réacteur.

Si l'on suppose que les températures sont les mêmes en tous les points de chacune des zones de mesure (ce qui correspond à un cas idéal, et est vrai en première approximation), on voit que le thermocouple 12 sera porté sensiblement à la température de la première zone, et le thermocouple 22 à la température de la seconde zone.

Les deux thermocouples 12 et 22 sont montés en opposition, de sorte que, chaque fois qu'un gradient de température existe entre les deux zones de mesure, apparaît une force électromotrice $\pm \Delta e$ (si les deux thermocouples sont de même nature, à un gradient nul correspond une force électro-motrice nulle). Cette force électromotrice différentielle est appliquée aux bornes 140a, 140b du dispositif de commutation 100. Sur la figure 2, le dispositif de commutation est un relais polarisé comportant une lame mobile 150a, 150b porte-contacts actionnée dans un sens ou dans l'autre par un enroulement 160 alimenté par la force électro-motrice $\pm \Delta e$.

De cette manière, on pourra faire en sorte que celui des deux harnais qui est commuté au circuit d'exploitation soit toujours celui porté à la température la plus élevée (on a vu plus haut que cela correspondait toujours au harnais fournissant une mesure représentative de la température de combustion).

Pour diminuer le gradient de température minimum provoquant la commutation, les deux thermocouples 12 et 22 peuvent être choisis différents, par exemple un thermocouple Cu-Ni/Ni-Cr pour l'un et un thermocouple Ni-Cr/Ni-Al pour l'autre : un tel choix des alliages permet, aux températures de fonctionnement indiquées, de disposer d'une force électro-motrice d'environ 20 mV pour une température de 600 °C. Les deux thermocouples n'ayant pas la même caractéristique en température, le gradient de déclenchement peut être abaissé aux environs de 25 °C, pour un gradient réel, lors d'une inversion de flux, de l'ordre de 50 °C.

En outre, le diamètre des fils des thermocouples peut être choisi pour que l'inertie thermique des thermocouples 11 et 21 constituant les sondes de mesure soit supérieure à l'inertie thermique des thermocouples 12 et 22 de commande des moyens de commutation. Cette disposition permet de détecter l'inversion de sens du gradient et provoquer la commutation avant même que les sondes de mesure indiquent la chute brutale de température.

Les figures 3 et 4 montrent une variante du dispositif de commutation 100, dans laquelle, pour chacun des circuits de mesure, les bornes 110a, 120a ou 110b, 120b aboutissent à des contacts fixes 111a, 121a ou 111b, 121b, placés respectivement en vis-à-vis.

Les bornes 130a, 130b du circuit d'exploitation sont reliées chacune à un fil 180a, 180b mobile entre les contacts fixes précités. Chacun de ces fils vient en contact avec l'un ou l'autre des contacts fixes de manière à laisser transiter un courant de mesure entre l'un des circuits de mesure et le circuit d'exploitation (ce courant est le courant débité soit par les thermocouples 11, soit par les thermocouples 21 dans le circuit d'exploitation). La direction du courant traversant les fils mobiles est sensiblement perpendiculaire à la direction de déplacement de ce fil.

Il est également prévu un élément générateur de champ magnétique, représenté séparément sur la figure 4, comportant un enroulement 160 alimenté par la force électromotrice différentielle produite par les thermocouples 12 et 22 reliés aux bornes 140a et 140b. Cet enroulement est par exemple réalisé autour d'un anneau torique 170 fendu de manière à ménager un entrefer 171.

Il est prévu un élément générateur de champ magnétique tel que celui de la figure 4 sur chacun des fils mobiles de la figure 3 ; chaque fil mobile est disposé dans l'entrefer 171 où il subit un champ magnétique B dont le sens et l'intensité dépendent de la force électromotrice différentielle.

Sous l'influence de ce champ magnétique, le fil mobile viendra en contact avec l'un ou l'autre des contacts fixes, assurant ainsi la sélection de l'un des circuits de mesure.

De préférence, il est prévu des pièces polaires allongées 172, 173, ces pièces polaires étant allongées parallèlement à la direction du fil mobile situé dans l'entrefer qu'elles déterminent.

En outre, il est prévu un condensateur tampon 190 relié à chaque extrémité de fil mobile non reliée au circuit d'exploitation, de manière à maintenir dans le fil un courant pendant le passage d'une position à l'autre. Ce condensateur pourrait assurer la continuité de la lecture pendant la commutation (continuité qui, dans le cas des réacteurs, est assurée en fait par l'inertie mécanique de l'indicateur, dont l'impédance est fixée par des normes strictes).

Bien que l'invention ait été décrite dans une application où elle procure des résultats particulièrement avantageux, elle peut s'appliquer à un grand nombre d'autres cas où l'on recherche une commutation de deux circuits (pas nécessairement des circuits de thermocouples, ni même d'ailleurs de sondes de température) en fonction d'un gradient présent entre deux points : le dispositif de l'invention permet par exemple, de manière simple et autonome, la recherche d'un maximum de température entre deux points ou entre un plus grand nombre de points, si l'on met plusieurs dispositifs en cascade. Un tel problème se rencontre fréquemment dans le domaine du génie chimique, où il est nécessaire, parmi plusieurs indications de températures, de rechercher celle correspondant à la température la plus élevée.

L'invention est également applicable à la simple commutation d'un signal unique (le circuit « d'exploitation » étant alors une entrée) vers l'un ou l'autre de deux circuits utilisant ce signal (les circuits « de mesure » constituant alors deux sorties du dispositif) en fonction du sens d'un gradient de température et à partir d'une valeur de seuil prédéterminée de celui-ci.

## Revendications

1. Dispositif de commutation pour assurer une liaison sélective de l'un ou l'autre de deux circuits électriques de mesure (110a, 110b ; 120a, 120b) à un circuit électrique unique d'exploitation (130a ; 130b), en fonction du gradient de température présent entre deux points distincts de référence d'un volume donné, caractérisé en ce qu'il comprend :

un premier thermocouple (12) placé au premier point de référence,

un deuxième thermocouple (22)· placé au second point de référence, monté en opposition avec le premier thermocouple de manière à délivrer une force électro-motrice différentielle ($\Delta e$) dont la valeur et le signe sont fonction de la valeur et du sens du gradient,

des moyens de commutation (100), sensibles à cette force électro-motrice et alimentés par la seule énergie produite par les deux thermocouples, propres à relier sélectivement l'un ou l'autre circuit de mesure au circuit d'exploitation selon le sens de variation de la force électro-motrice différentielle par rapport à la force électromotrice correspondant à un gradient nul, lorsque la valeur absolue de cette variation dépasse un seuil prédéterminé.

2. Dispositif selon la revendication 1, caractérisé en ce que les moyens de commutation comprennent un relais polarisé dont les bornes (140a, 140b) de l'enroulement (160) sont alimentées par la force électromotrice différentielle, le champ magnétique produit par cet enroulement actionnant une lame mobile (150a, 150b) porte-contacts assurant la commutation sélective des différents circuits, qui aboutissent à des bornes fixes du relais.

3. Dispositif selon la revendication 1, caractérisé en ce que les moyens de commutation comprennent :

au moins une paire de contacts (111a, 121a ; 111b, 121b) fixes distincts, placés en vis-à-vis et reliés respectivement à l'un et l'autre des circuits de mesure,

au moins un fil (180a ; 180b), mobile entre les deux contacts fixes, et dont une extrémité est reliée au circuit d'exploitation, ce fil venant en contact avec l'un ou l'autre des contacts fixes de manière à laisser transiter un courant de mesure entre l'un des circuits de mesure et le circuit d'exploitation, et la direction de ce courant étant sensiblement perpendiculaire à la direction de déplacement du fil,

un élément (160, 170) générateur de champ magnétique alimenté par la force électro-motrice différentielle, ce champ magnétique (B), orienté perpendiculairement à la direction du courant et à la direction de déplacement du fil, agissant sur le fil mobile traversé par le courant de mesure de manière à le faire venir sélectivement en contact avec l'un ou l'autre des contacts fixes en fonction du signe de la force électro-motrice différentielle,

des moyens pour maintenir un courant dans le fil lorsque celui-ci quitte au moins l'un des contacts fixes.

4. Dispositif selon la revendication 3, caractérisé en ce que l'élément générateur de champ magnétique comprend un enroulement (160) réalisé autour d'un noyau torique (170) fendu radialement de manière à former un entrefer (171), le fil mobile étant disposé dans cet entrefer.

5. Dispositif selon la revendication 4, caractérisé en ce que le noyau est pourvu de pièces polaires (172, 173), de forme allongée parallèlement à la direction du fil mobile.

6. Dispositif selon l'une quelconque des revendications 4 et 5, caractérisé en ce que les moyens pour maintenir un courant dans le fil comprennent un condensateur tampon (190) relié à chaque extrémité de fil mobile non reliée au circuit d'exploitation, de manière à maintenir dans le fil un courant pendant son déplacement d'un contact fixe à l'autre.

7. Dispositif selon l'une quelconque des revendications 1 à 6, caractérisé en ce que l'un des thermocouples est un thermocouple Cu-Ni/Ni-Cr, l'autre thermocouple étant un thermocouple Ni-Cr/Ni-Al.

8. Dispositif selon l'une quelconque des revendications 1 à 7, caractérisé en ce que chacun des circuits de mesure comprend au moins une sonde (11 ; 21) de mesure de température placée au voisinage du premier ou du second point de référence, respectivement.

9. Dispositif selon la revendication 8, caractérisé en ce que la sonde de mesure est une sonde à thermocouples.

10. Dispositif selon la revendication 9, caractérisé en ce que l'inertie thermique des thermocouples constituant les sondes de mesure est supérieure à l'inertie thermique des thermocouples de commande des moyens de commutation.

**Claims**

1. Switching device for ensuring selective connection of one or other of two electrical measuring circuits (110a, 110b ; 120a, 120b) to a single electrical exploitation circuit (130a ; 130b) depending on the temperature gradient present between two separate reference points of a given volume, characterised in that it comprises :

a first thermocouple (12) located at the first reference point,

a second thermocouple (22) located at the second reference point, mounted in opposition to the first thermocouple in order to supply a differential electromotive force ($\Delta$e) whereof the value and the sign depend on the value and the direction of the gradient,

switching means (100), sensitive to this electromotive force and supplied by the sole energy produced by the two thermocouples, able to selectively connect one or other measuring circuit to the exploitation circuit depending on the direction of variation of the differential electromotive force with respect to the electromotive force corresponding to a zero gradient, when the absolute value of this variation exceeds a predetermined threshold.

2. Device according to Claim 1, characterised in that the switching means comprise a polarized relay whereof the terminals (140a, 140b) of the winding (160) are supplied by the differential electromotive force, the magnetic field produced by this winding actuating a contact-carrying movable strip (150a, 150b) ensuring the selective switching of the different circuits, which terminate in fixed terminals of the relay.

3. Device according to Claim 1, characterised in that the switching means comprise :

at least one pair of separate fixed contacts (111a, 121a ; 111b, 121b), located in facing relationship and respectively connected to one and the other of the measuring circuits,

at least one conductor (180a ; 180b), able to move between the two fixed contacts and whereof one end is connected to the exploitation circuit, this conductor coming into contact with one or other of the fixed contacts in order to allow a measuring current to pass between one of the measuring circuits and the exploitation circuit and the direction of this current being substantially perpendicular to the direction of movement of the conductor,

a member (160, 170) for generating a magnetic field supplied by the differential electromotive force, this magnetic field (B), orientated perpendicularly to the direction of the current and to the direction of movement of the conductor, acting on the movable conductor through which the measuring current passes in order to bring it selectively into contact with one or other of the fixed contacts depending on the sign of the differential electromotive force,

means for maintaining a current in the conductor when the latter leaves at least one of the fixed contacts.

4. Device according to Claim 3, characterised in that the member for generating the magnetic field comprises a winding (160) provided around an annular core (170) split radially in order to form an air gap (171), the movable conductor being arranged in this air gap.

5. Device according to Claim 4, characterised in that the core is provided with pole pieces (172, 173) of elongated shape parallel to the direction of the movable conductor.

6. Device according to one of Claims 4 and 5, characterised in that the means for maintaining a current in the conductor comprise a buffer capacitor (190) connected to each end of the movable conductor which is not connected to the exploitation circuit, in order to maintain a current in the conductor during its movement from one fixed contact to the other.

7. Device according to one of Claims 1 to 6, characterised in that one of the thermocouples is a Cu-Ni/Ni-Cr thermocouple, the other thermocouple being an Ni-Cr/Ni-Al thermocouple.

8. Device according to one of Claims 1 to 7, characterised in that each of the measuring circuits comprises at least one temperature measuring probe (11 ; 21) located in the vicinity of the first or second reference point respectively.

9. Device according to Claim 8, characterised in that the measuring probe is a probe comprising thermocouples.

10. Device according to Claim 9, characterised in that the thermal inertia of the thermocouples constituting the measuring probes is greater than the thermal inertia of the thermocouples controlling the switching means.

**Patentansprüche**

1. Schaltvorrichtung zum Gewährleisten einer selektiven Verbindung vom einen oder anderen Meßschaltkreis von zwei elektrischen Schaltkreisen zu einer einzigen elektrischen Betriebsschaltung (130a ; 130b) abhängig von einem Temperaturgradienten, der zwischen zwei bestimmten Bezugspunkten eines gegebenen Volumens vorliegt, gekennzeichnet durch

ein erstes Thermoelement (12), das am ersten Bezugspunkt liegt,

ein zweites Thermoelement (22), das am zweiten Bezugspunkt liegt und gegenüber dem ersten Thermoelement so befestigt ist, um eine differentielle elektromotorische Kraft (Δe) zu liefern, deren Wert und Vorzeichen von Wert und Richtung des Gradienten abhängen,

Umschalteinrichtungen (100), die auf diese elektromotorische Kraft ansprechen und durch die einzige Energie versorgt sind, welche durch die Thermoelemente erzeugt wird, und die geeignet sind, selektiv den einen oder den anderen Meßschaltkreis mit der Betriebsschaltung gemäß dem Änderungssinn der differentiellen elektromotorischen Kraft bezüglich der elektromotorischen Kraft entsprechend einem Gradienten Null zu verbinden, wenn der Absolutwert dieser Änderung einen vorbestimmten Schwellenwert übersteigt.

2. Vorrichtung nach Anspruch 1, dadurch gekennzeichnet, daß die Umschalteinrichtungen ein gepoltes Relais aufweisen, dessen Klemmen (140a, 140b) der Wicklung (160) durch die differentielle elektromotorische Kraft versorgt sind, wobei das durch diese Wicklung erzeugte Magnetfeld eine bewegliche Kontakthalterzunge (150a, 150b) betätigt, die die selektive Umschaltung der verschiedenen Schaltungen gewährleistet, welche an den festen Klemmen des Relais enden.

3. Vorrichtung nach Anspruch 1, dadurch gekennzeichnet, daß die Umschalteinrichtungen umfassen :

mindestens ein festes, bestimmtes Kontaktpaar (111a, 121a ; 111b, 121b), das gegenüber dem einen bzw. dem anderen Meßkreis liegt und mit diesem verbunden ist,

mindestens einen Leiter (180a ; 180b), der zwischen den beiden festen Kontakten beweglich ist und dessen eines Ende mit der Betriebsschaltung verbunden ist, wobei dieser Leiter mit dem einen oder dem anderen festen Kontakt so in Berührung kommt, daß ein Meßstrom zwischen dem einen Meßkreis und der Betriebsschaltung übergeht und wobei die Richtung dieses Strom im wesentlichen senkrecht zur Richtung der Verschiebung des Leiters ist,

ein durch die differentielle elektromotorische Kraft versorgtes Generatorelement (160, 170) für ein Magnetfeld (B), das senkrecht zur Richtung des Stroms und zur Richtung der Verschiebung des Leiters ausgerichtet ist und das auf den vom Meßstrom durchquerten beweglichen Leiter so einwirkt, daß dieser selektiv in Berührung mit dem einen oder dem anderen festen Kontakt abhängig vom Vorzeichen der differentiellen elektromotorischen Kraft kommt,

Einrichtungen zum Aufrechterhalten eines Stroms im Leiter, wenn dieser mindestens den einen der festen Kontakte verläßt.

4. Vorrichtung nach Anspruch 3, dadurch gekennzeichnet, daß das Generatorelement für das Magnetfeld eine Wicklung (160) um einen Toruskern (70) umfaßt, der radial so geschlitzt ist, daß ein Luft- oder Eisenspalt (171) entsteht, und daß der bewegliche Leiter in diesem Luftspalt angeordnet ist.

5. Vorrichtung nach Anspruch 4, dadurch gekennzeichnet, daß der Kern mit Polstücken (172, 173) mit länglicher Form parallel zur Richtung des beweglichen Leiters versehen ist.

6. Vorrichtung nach Anspruch 4 oder 5, dadurch gekennzeichnet, daß die Einrichtungen zum Aufrechterhalten eines Stroms im Leiter einen Pufferkondensator (190) umfassen, der mit jedem nicht mit der Betriebsschaltung verbundenen Ende des beweglichen Leiters so verbunden ist, daß im Leiter ein Strom während seiner Verschiebung vom einem festen Kontakt zum anderen aufrechterhalten wird.

7. Vorrichtung nach einem der Ansprüche 1 bis 6, dadurch gekennzeichnet, daß das eine Thermoelement ein Cu-Ni/Ni-Cr-Thermoelement und das andere Thermoelement ein Ni-Cr/Ni-Al-Thermoelement ist.

8. Vorrichtung nach einem der Ansprüche 1 bis 7, dadurch gekennzeichnet, daß jeder der Meßkreise mindestens eine Temperaturmeßsonde (11 ; 21) umfaßt, die in der Nähe jeweils des ersten oder des zweiten Bezugspunkts angeordnet ist.

9. Vorrichtung nach Anspruch 8, dadurch gekennzeichnet, daß daß die Meßsonde eine Sonde mit Thermoelementen ist.

10. Vorrichtung nach Anspruch 9, dadurch gekennzeichnet, daß die thermische Trägheit der die Meßsonden bildenden Thermoelemente größer als die thermische Trägheit der Thermoelemente zur Steuerung der Umschalteinrichtungen ist.

**FIG_1**

**FIG_2**

**FIG_3**

**FIG_4**